# EUROPEAN PATENT APPLICATION

(11) **EP 1 726 803 A2**
(43) Date of publication of application: **29.11.2006**
(21) Application number: 06010823.0
(22) Date of filing: 26.05.2006
(51) Int. Cl.: F02C 7/232, F02C 9/46

(54) **Hydraulic lock for axial motion output device**

(30) Priority: 27.05.2005 US 685358 P
(71) Applicant: Goodrich Pump & Engine Control Systems, Inc., West Hartford, Connecticut 06133-0651 (US)
(72) Inventor: Dalton, William H., Amston, Connecticut 06231 (US); Smedley, Paul, Avon, Connecticut 06001 (US)
(74) Representative: Liska, Horst

(57) **Abstract**

A system for locking the axial position of an axial motion output device upon the loss of an electrical input signal includes a locking device operatively associated with the output device and adapted for movement between a neutral position in which the output device can move freely relative to the locking device (24) and a locking position in which the locking device frictionally engages the output device (16) with a sufficient amount of force to prevent further movement thereof upon the loss of an electrical input signal.

## Description

### CROSS-REFERENCE TO RELATED APPLICATIONS

This application claims priority to U.S. Provisional Patent Application Serial No. 60/685,358, filed May 27, 2005, the disclosure of which is hereby incorporated by reference in its entirety.

### BACKGROUND OF THE INVENTION

### 1. Field of the Invention

The subject invention relates to control of hydraulic systems. More specifically, the invention relates to fuel metering systems for gas turbine engines, and more particularly, to a hydraulic lock for an axial motion output device used in a fuel metering system of a gas turbine engine.

### 2. Background of the Related Art

Hydraulic axial motion output systems are an essential part of any engine fuel metering system. Typically, in aircraft applications, servo-controlled axial motion output devices, such as axially acting pistons, are used to schedule fuel flow and to position variable geometry actuation systems. These systems are typically driven with an electromechanical device that functions by way of a varying electronic input signal. Often times, as a required safety measure, it is necessary to "freeze" the position of the axial motion output device in the event of an electronic signal failure. This is typically referred to as "fail fixed."

Since they act on a varying electrical signal input, the tendency for these types of output devices is to fail to a position corresponding to a low electrical signal. This is commonly referred to as "failing down," and is not a preferred condition in instances where the metered fuel flow in the last commanded position is critical for the continued safe control of an aircraft. It is desired, therefore to provide a system that achieves a "fail fixed" condition for an axial motion output device, which is adapted to override the effect of a decaying electrical signal that would otherwise result in a "fail down" condition.

The subject invention is directed to a new and useful system that is adapted and configured to achieve a "fail fixed" condition for an axial motion output device of a fuel metering system, in the event of an electrical signal failure, by frictionally or otherwise physically engaging the axial motion output device, thus overriding the effect of a decaying electrical signal.

### SUMMARY OF THE DISCLOSURE

The subject invention is directed to a system for locking the axial position of a servo-controlled axial motion output device upon the loss of an electrical input signal to the fuel metering system. The system includes a locking device operatively associated with the output device and adapted for movement between a neutral position in which the output device can move freely relative to the locking device and a locking position in which the locking device frictionally or otherwise physically engages the output device with a sufficient amount of force to prevent further movement of the output device upon loss of an electrical input signal.

In an embodiment of the subject invention, the locking device is a ring of expandable or otherwise deformable material, such as a metallic, elastomeric or plastic material, that surrounds an outer periphery of the output device, and which is constrained about its outer diameter such that axial compression of the locking device causes the material to exert a radially inwardly directed force on the outer periphery of the output device, thus locking the axial position thereof. In an embodiment of the subject invention, the ring of material is a deformable metallic ring having a generally toroidal configuration that is constrained about its outer diameter in such a manner so as to facilitate the radially inward expansion thereof when it is compressed under a generally axially applied load.

In an embodiment of the subject invention, the system further comprises means for moving the locking device from the neutral position to the locking position. The means for moving the locking device preferably includes a locking piston configured to generally axially compress the ring of expandable or otherwise deformable material. The locking piston is preferably in fluid communication with a normally regulated source of high-pressure fluid, and is thus hydraulically energized. Upon the loss of an electrical input signal, the normally regulated source of high-pressure fluid exerts a motive force on the locking piston. This causes the locking piston to load or otherwise exert an axially directed compressive force on the ring of expandable or otherwise deformable material, causing it to frictionally engage the output device and prevent it from moving, thus locking its output position.

In accordance with another aspect of the invention, a system is provided for locking the axial position of an axial motion output device upon the loss of an electrical input signal, having a locking element, a piston and an electrically actuated element. The locking element is configured to engage a shaft of the axial motion output device and is adapted and configured to frictionally engage a surface of the shaft when pressure is applied to the locking element in a predetermined manner. The locking element can have a substantially toroidal shape, and can be made of metal, plastic or an elastomer, depending on the implementation. Depending on the implementation of the invention, the locking element can be configured to deform in response to an applied axially-oriented load, and expand in a radial direction relative to the axial motion output device to frictionally engage the axial motion output device and secure an axial position thereof.

The piston is configured and adapted for applying pressure to the locking element. The electrically actuated element has a normal operating range and a failure position, to which the electrically actuated element moves upon loss of an electric signal. The electrically actuated element permits passage of pressurized fluid to the piston when in a failure position. The electrically actuated element can be an electrically variable flow control device, which adjusts pressure controlling a position of the axial motion output device. Further, depending on the implementation, the electrically actuated element can be a torque motor having a movable flapper arm. A spring can be provided and configured to move the flapper arm into the failure position upon loss of an electrical signal to the electrically actuated element.

The shaft of the axial motion output device can include a fuel metering element, and/or can be adapted and configured to actuate an external device. If desired, flow restriction elements can be provided in hydraulic lines to adjust fluid flow therethrough.

In accordance with still another aspect of the invention, a method of securing an axial motion output device upon loss of an electric control signal is provided. The method includes providing a locking element, piston and electrically actuated element.

The locking element is configured to engage a shaft of the axial motion output device and is adapted and configured to frictionally engage a surface of the shaft when pressure is applied to the locking element in a predetermined manner. The piston is configured and adapted for applying pressure to the locking element. The electrically actuated element has a normal operating range and a failure position, to which the electrically actuated element moves upon loss of an electric signal. The electrically actuated element permits passage of pressurized fluid to the piston when in a failure position.

The method further comprises diverting a pressurized fluid flow to the piston when the electrically actuated element is in a failure position. The pressurized fluid flow moves the piston, which causes the locking element to frictionally engage a surface of the shaft, inhibiting axial movement of the shaft.

The method can further include, depending on the implementation, applying an axially-oriented load to the locking element, causing the locking element to expand in a radial direction relative to the axial motion output device, and frictionally engage the axial motion output device, securing an axial position thereof.

These and other features of the new and useful hydraulic lock for an axial motion output device will become more readily apparent from the following enabling description of the subject invention, taken in conjunction with the drawings accompanying the subject disclosure.

### BRIEF DESCRIPTION OF THE DRAWINGS

So that those having ordinary skill in the art to which the subject invention appertains will more readily appreciate how to make and use the hydraulic locking system disclosed herein, preferred embodiments thereof will be described herein with respect to the drawings, wherein:
Fig. 1 is a cross-sectional view illustrating the failing fixed implementation of a hydraulic locking device in accordance with a preferred embodiment of the subject invention in conjunction with a typical fuel metering arrangement; and
Fig. 2 is a cross-sectional view illustrating the failing fixed implementation of a hydraulic locking device in accordance with a preferred embodiment of the subject invention in conjunction with a typical variable geometry arrangement.

### ENABLING DESCRIPTION OF THE PREFERRED EMBODIMENTS

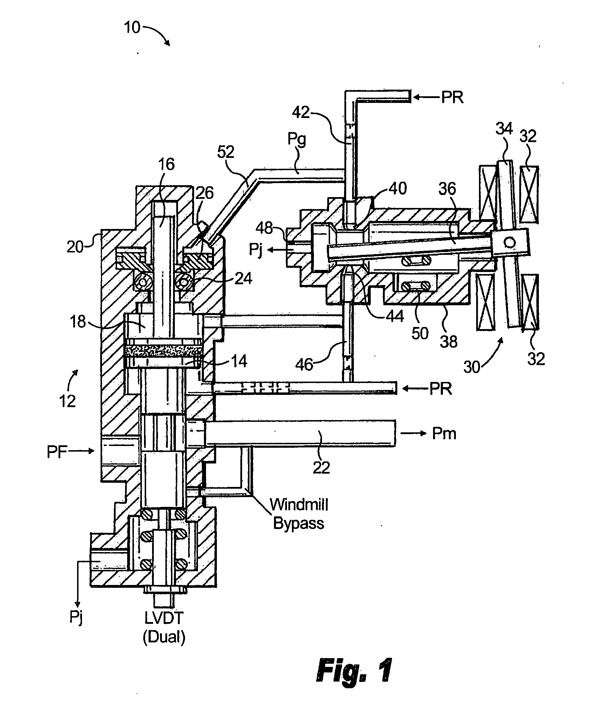

Referring now to the drawings wherein like reference numerals identify similar structural elements or features of the subject invention, there is illustrated in Fig. 1, a cross-sectional view of a failing fixed implementation of the subject invention in conjunction with a typical fuel metering system 10.

Referring to Fig. 1, the fuel metering system 10 includes a servo-controlled axial motion output device 12 that includes a piston 14 and associated piston shaft 16 supported within an interior piston chamber 18 of a piston housing 20. The piston 14 functions to meter the flow of filtered fuel to a gas turbine engine. More particularly, filtered fuel PF enters the piston housing 20 from a high-pressure fuel source. A metered fuel flow Pm exits the piston housing 20 for delivery to an engine by way of a fuel conduit 22. A windmill bypass can be provided to relieve pressure in fuel conduit 22 when the fuel flowing through the piston housing 20 is cut off by the closure of the piston 14.

The piston shaft 16 can be connected to a linear variable displacement transducer (LVDT), used as a feedback sensor in a control system of the fuel metering system 10, for sensing the position of the piston shaft 16. Such LVDT can be of a dual channel variety, for example, which sends redundant signals to the control system in the case of failure of one of the channels.

Also supported within the piston housing 20 is a locking device 24. In this embodiment of the invention, locking device 24 is a compressible metallic ring having a generally toroidal configuration that is constrained about its outer diameter by the piston housing 20. The locking device 24 is adapted to transition from a neutral state shown in Fig. 1, in which the piston shaft 16 can move freely with respect thereto, to a locking state in which the piston shaft 16 is frictionally engaged and thus prohibited from moving axially. As discussed further below, other types or forms of locking devices can be employed within the disclosed system without departing from the spirit or scope of the subject invention.

A locking piston 26 is also supported within the piston housing 20. As discussed in more detail below, locking piston 26 is adapted and configured to exert an axially directed compressive force against the locking device 24 (e.g., the metallic ring) to cause the locking device 24 to frictionally engage the piston shaft 16 upon the loss of an electrical input signal. In other words, the locking piston 26 causes the locking device 24 to transition from the neutral position shown in Fig. 1 to a locking position (not shown), in which the piston shaft 16 is secured in a fixed axial position. Such transitioning from a neutral position to a locking position, for example as embodied herein, can be accomplished by causing deformation of the locking device 24. However, otherwise effecting frictional engagement between the locking device 24 and the piston shaft 16, is also within the scope of the present invention.

The metering system 10 further includes a torque motor 30 having electrical coils 32 and a pivoting armature 34. The armature 34 has a flapper arm 36 extending therefrom. The flapper arm 36 is operatively associated with a fuel chamber 38. Fuel chamber 38 has an upper inlet nozzle 40 in communication with a high-pressure hydraulic signal PR through a flow restricted servo line 42 and a lower inlet nozzle 44 in communication with a high pressure hydraulic signal PR through a flow restricted servo line 46. Fuel chamber 38 further includes an outlet 48 for returning low-pressure flow Pj to a recirculating jet pump (not shown). A biasing spring 50 is disposed within fuel chamber 38 for biasing the flapper arm 36 of armature 34 toward the upper inlet nozzle 40.

As illustrated in Fig. 1, a conduit 52 provides fluid communication between the piston housing 20 and the high-pressure servo line 42 that feeds the upper inlet nozzle 40 of fuel chamber 38. More particularly, conduit 52 is designed to feed directly into the locking piston chamber 26a of housing 20 to provide a motive force to the locking piston 26 supported therein, upon the loss of an electrical input signal to torque motor 30.

During normal operation, the current to the torque motor 30 is varied to change the pressure signal behind the lower nozzle orifice 44, thus moving the piston 14 upwardly or downwardly to the desired fuel metering position to adjust fuel flow Pm. Meanwhile, the upper nozzle orifice 40 remains fully open. Thus, no pressure signal is generated in servo line 42 during normal operation and the line pressure Pg in conduit 52 is insufficient to provide a hydraulic motive force to locking piston 26.

Upon the loss of an electrical input signal to the torque motor 30 of the fuel metering system 10, the biasing spring 50 will force the flapper arm 36 into a blocking position with respect to upper inlet nozzle 40. At such a time, the line pressure Pg in conduit 52 will equate with the high-pressure signal PR in servo line 42 and exert a hydraulic motive force on locking piston 26. This will cause piston 26 to load or otherwise exert an axially directed force on the locking device 24. This in turn will cause the locking device 24 to experience a compressive force, which will elastically deform the locking device 24. The elastic deformation will cause an inward radial expansion of the locking device 24, thus transitioning the locking device 24 from the neutral state of Fig. 1 to a locking state, with respect to the piston shaft 16. Consequently, upon the loss of power to torque motor 30, the axial position of piston shaft 16 will become locked, thus maintaining the last commanded fuel metering position of the axial motion output device 12.

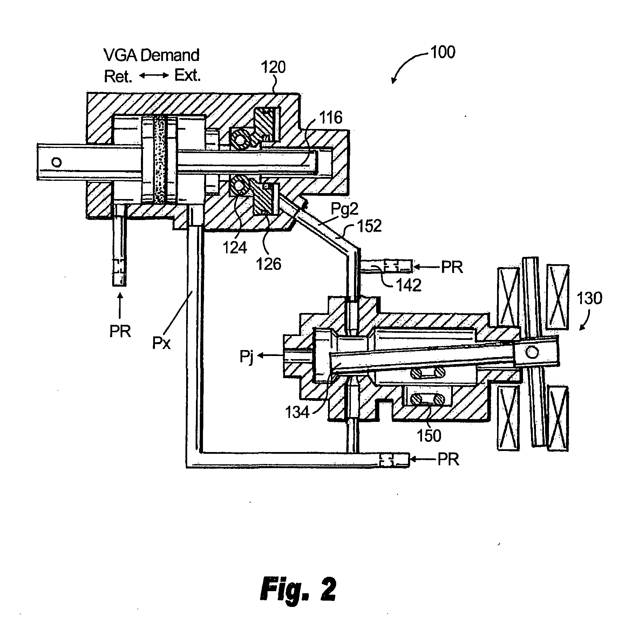

Referring now to Fig. 2, there is illustrated a cross-sectional view of a failing fixed implementation of the subject hydraulic lock 100 in conjunction with a variable geometry arrangement. In this configuration, the piston shaft 116 is operatively associated with a linkage (not shown) that controls the position of variable guide vanes of a fuel pump. As illustrated, the piston shaft 116 moves to effect a change, in accordance with demand. Such a variable geometry actuator or "VGA" moves to adjust another element to which the piston shaft 116 is connected via the aforementioned linkage. As illustrated, the piston can respond to a demand for retraction ("Ret.") or extension ("Ext."). As illustrated, proximal movement of the piston shaft 116 into the housing 120 effects an extension, since the linkage can be configured to alter the direction of movement. This is aspect of the particular embodiment illustrated in Figure 2 is not intended to be limiting in any way. Naturally, a linkage or other mechanical element to which the piston shaft 116 is attached can be of any desired configuration, for any desired purpose where position locking during loss of en electric control signal is needed or desired.

In the embodiment of Figure 2, the piston shaft 116 is disposed within a piston housing 120 along with a locking device 124 and a hydraulically actuated locking piston 126. As in the previous embodiment of the subject invention, upon the loss of an electrical signal to torque motor 130, flapper arm 134 is urged into a blocking position by biasing spring 150, creating a high-pressure signal in conduit 152.

At such a time, the line pressure Pg2 in conduit 152 will equate with the high-pressure signal PR in servo line 142 and exert a hydraulic motive force on locking piston 126. This will cause piston 126 to move in an axial direction with respect to locking device 124. This in turn will cause the locking device 124 to undergo compression and hence inward radial expansion, thus moving from the neutral position of Fig. 2 to a locking position relative to piston shaft 116. Consequently, upon the loss of power to torque motor 130, the axial position of piston shaft 116 will become locked, thus maintaining the last commanded position of the variable guide vanes operatively connected thereto by way of a linkage.

While the hydraulic locking devices of the subject invention have been described with respect to preferred embodiments, those skilled in the art will readily appreciate that modifications and/or changes may be made thereto, without departing from the spirit or scope of the subject invention. For example, those skilled in the art will readily appreciate that many other devices are available to frictionally engage or otherwise lock the position of the axial motion output device such as, for example, an elastomeric or plastic pad which can be constrained by the piston housing in such a manner so to permit radially inward expansion with respect to the piston shaft. Moreover, it is envisioned and well within the scope of the subject invention that the failing fixed implementations disclosed herein need not include the locking piston feature. Rather, it is envisioned that the system could only include a locking device, such as an elastomeric or plastic gripping pad or device that is in direct communication with a high pressure hydraulic signal which provides the compressive force necessary to facilitate frictional engagement of the piston shaft. It is further envisioned that the locking devices of the present invention can be utilized for fluid metering in cases other than metering of fuel, or with axial motion control components other than for control of variable guide vanes of a fuel pump.

A system for locking the axial position of an axial motion output device upon the loss of an electrical input signal includes a locking device operatively associated with the output device and adapted for movement between a neutral position in which the output device can move freely relative to the locking device and a locking position in which the locking device frictionally engages the output device with a sufficient amount of force to prevent further movement thereof upon the loss of an electrical input signal.

## Claims

1. A system for locking the axial position of an axial motion output device upon the loss of an electrical input signal comprising: a locking device operatively associated with the output device and adapted for movement between a neutral position in which the output device can move freely relative to the locking device and a locking position in which the locking device frictionally engages the output device with a sufficient amount of force to prevent further movement thereof upon the loss of an electrical input signal.

2. A system as recited in claim 1, further comprising means for moving the locking device from the neutral position to the locking position.

3. A system as recited in claim 2, wherein the locking device is a ring of material surrounding an outer periphery of the output device and constrained about its outer diameter such that generally axial compression of the material causes the ring of material to exert a radially inwardly directed force on the outer periphery of the output device.

4. A system as recited in claim 3, wherein the means for moving the locking device includes a locking piston configured to exert a generally axially directed compressive force on the ring of material.

5. A system as recited in clam 4, wherein the locking piston is in fluid communication with a normally regulated source of high-pressure fluid.

6. A system as recited in claim 5, wherein upon the loss of an electrical input signal, the normally regulated source of high-pressure fluid exerts a motive force on the locking piston, causing the locking piston to exert a compressive force on the ring of material.

7. A system for locking the axial position of an axial motion output device upon the loss of an electrical input signal comprising:
a locking element for engaging a shaft of the axial motion output device, the locking element being adapted and configured to frictionally engage a surface of the shaft when pressure is applied to the locking element in a predetermined manner;
a piston for applying pressure to the locking element; and
an electrically actuated element having a normal operating range and a failure position to which the electrically actuated element moves upon loss of an electric signal, the electrically actuated element in a failure position permitting passage of pressurized fluid to the piston.

8. The system of claim 7, wherein the locking element is a substantially toroidal element.

9. The system of claim 7, wherein the locking element is made of a metal, plastic or elastomer.

10. The system of claim 7, wherein the locking element is configured to deform in response to an axially applied load and expand in a radial direction relative to the axial motion output device, to frictionally engage the axial motion output device and secure an axial position thereof.

11. The system of claim 7, wherein the electrically actuated element is an electrically variable flow control device, which adjusts pressure controlling a position of the axial motion output device.

12. The system of claim 7, wherein the electrically actuated element is a torque motor having a movable flapper arm.

13. The system of claim 12, wherein a spring is configured to move the flapper arm into the failure position upon loss of an electrical signal to the electrically actuated element.

14. The system of claim 7, wherein the shaft of the axial motion output device includes a fuel metering element.

15. The system of claim 7, wherein the shaft of the axial motion output device is adapted and configured to actuate an external device.

16. The system of claim 7, wherein flow restriction elements are provided in hydraulic lines to adjust fluid flow therethrough.

17. A method of securing an axial motion output device upon loss of an electric control signal, the method comprising:
providing a locking element for engaging a shaft of the axial motion output device, the locking element being adapted and configured to frictionally engage a surface of the shaft when pressure is applied to the locking element in a predetermined manner;
providing a piston for applying pressure to the locking element;
providing an electrically actuated element having a normal operating range and a failure position to which the electrically actuated element moves upon loss of an electric signal, the electrically actuated element in a failure position permitting passage of pressurized fluid to the piston;
diverting a pressurized fluid flow to the piston when the electrically actuated element is in a failure position, the pressurized fluid flow moving the piston, which causes the locking element to frictionally engage a surface of the shaft, inhibiting axial movement of the shaft.

18. The method of claim 17, further comprising:
applying an axially-oriented load to the locking element, causing the locking element to expand in a radial direction relative to the axial motion output device, and frictionally engage the axial motion output device, securing an axial position thereof.
